# EUROPEAN PATENT APPLICATION

(11) **EP 4 620 561 A1**
(43) Date of publication of application: **24.09.2025**
(21) Application number: 24200450.5
(22) Date of filing: 16.09.2024
(51) Int. Cl.: B01F 31/40, B01F 27/1152, B01F 27/232, B01F 27/95, B01F 27/93, B01F 35/221, B01F 35/21, B01F 35/22

(54) **APPARATUS FOR MIXING AND AGITATING SECONDARY BATTERY ELECTRODE MATERIALS AND CONTROL METHOD THEREOF**

(30) Priority: 19.03.2024 KR 20240037579
(71) Applicant: SAMSUNG SDI CO., LTD., Giheung-gu Yongin-si, Gyeonggi-do 17084 (KR)
(72) Inventor: Lee, Hyunjin, 17084 Yongin-si, Gyeonggi-do (KR)
(74) Representative: Gulde & Partner

(57) **Abstract**

An apparatus for mixing and agitating secondary battery electrode materials includes: a vessel (300) configured to accommodate secondary battery electrode material; an agitator (510) configured to rotate and elevate to agitate the material in the vessel (300); a rotation controller (610) configured to control the rotation of the agitator (510); and an elevation controller (710) configured to control the elevation of the agitator (510).

## Description

### BACKGROUND

### 1. Field

Aspects of embodiments of the present disclosure relate to an apparatus for mixing and agitating secondary battery electrode materials and a control method thereof.

### 2. Description of the Related Art

Different from primary batteries, which are not designed to be (re)charged, secondary batteries are designed to be discharged and recharged. Generally, a secondary battery includes an electrode assembly including (or composed of) positive/negative electrode plates and a separator. The positive/negative electrode plates of the electrode assembly may be manufactured by using a process of coating an electrode material on a substrate, followed by processes, such as rolling, drying, slitting, and notching. Examples of the electrode material may include an active material, a binder, a solvent, and so on.

Examples of positive electrode materials may include a lithium nickel-based oxide, a lithium cobalt-based oxide, a lithium manganese-based oxide, a lithium iron phosphate-based compound, a cobalt-free nickel-manganese-based oxide, and other binders and/or conductive materials. Examples of negative electrode materials may include crystalline carbon, such as natural graphite or artificial graphite, soft carbon or hard carbon, amorphous carbon, such as meso-phase pitch carbide or calcined coke, and silicon or silicon-carbon composite.

Materials used for manufacturing secondary battery electrodes should be uniformly mixed and agitated with a mixer. However, conventional mixers have a limitation in their dispersion efficiency of materials within the vessel thereof because the agitator performs mixing only by rotating within the vessel.

The above information disclosed in this Background section is for enhancement of understanding of the background of the present disclosure, and therefore, it may contain information that does not constitute related (or prior) art.

### SUMMARY

Accordingly, embodiments of the present disclosure provide a mixer device (e.g., a mixer) having increased dispersion efficiency of materials by improving a structure and operation of its agitator and a control method thereof.

An apparatus for mixing and agitating secondary battery electrode materials, according to an embodiment of the present disclosure, includes a vessel into which a secondary battery electrode material is input, an agitator configured to rotate and elevate to agitate the material in the vessel, a rotation controller configured to control the rotation of the agitator, and an elevation controller configured to control the elevation of the agitator.

According to an embodiment of the present disclosure, the agitator may comprise a plurality of agitating pins protruding at different lengths with respect to each other.

According to an embodiment of the present disclosure, the agitating pins may comprise a first agitating pin having a protruding length in a range of 150 to 250 mm, a second agitating pin having a protruding length in a range of 250 to 350 mm, and a third agitating pin having a protruding length in a range of 350 to 450 mm.

According to an embodiment of the present disclosure, the agitator may have a diameter in a range of 800 to 950 mm.

According to an embodiment of the present disclosure, the agitator may have a diameter that is in a range of 50% to 80% of an inner diameter of the vessel.

According to an embodiment of the present disclosure, the agitator may be configured to rotate and revolve.

According to an embodiment of the present disclosure, the rotation controller may comprise at least one of a material input start recognition unit configured to determine a point of time when the material is input into the vessel, a material input end recognition unit configured to determine a point of time when the input of the material ends, a material type recognition unit configured to determine a type of material, a material input amount recognition unit configured to determine an amount of the input material, a mixing time recognition unit configured to determine a time required to mix the material, and a kneading recognition unit configured to determine completion of kneading of the material.

According to an embodiment of the present disclosure, the rotation controller may further comprise a communication unit configured to communicate with the elevation controller to exchange information.

According to an embodiment of the present disclosure, the elevation controller may comprise at least one of a material input start recognition unit configured to determine a point of time when the material is input into the vessel, a material input end recognition unit configured to determine a point of time when the input of the material ends, a material type recognition unit configured to determine a type of material, a material input amount recognition unit configured to determine an amount of the input material, a mixing time recognition unit configured to determine a time required to mix the material, and a kneading recognition unit configured to determine completion of kneading of the material.

According to an embodiment of the present disclosure, the elevation controller further comprises a communication unit configured to communicate with the rotation controller to exchange information.

According to an embodiment of the present disclosure, the elevation controller may further comprise an elevation mode storage unit configured to store an elevation mode.

According to another embodiment of the present disclosure, a method of controlling an apparatus for mixing and agitating secondary battery electrode materials is provided. The apparatus includes an agitator configured to rotate and elevate to agitate a secondary battery electrode material in a vessel and is controlled by a computer processor. The method includes, by the processor, recognizing start of input of the material into the vessel, moving the agitator to a low position close to a bottom of the vessel, rotating the agitator in the low position to mix the input material, determining whether or not the input of the material is completed, and when the input of the material is completed, rotating the agitator while raising it toward an upper part of the material.

According to an embodiment of the present disclosure, the determine whether or not the input of the material may be completed comprises determining whether or not kneading of the material is completed.

According to an embodiment of the present disclosure, the rotating of the agitator while raising it toward the upper part of the material may comprise: determining whether or not a reference time is reached while the agitator rises and rotates; and when it is determined that the reference time is reached, simultaneously lowering and rotating the agitator.

According to an embodiment of the present disclosure, the method may further comprise: stopping the rise of the agitator while the agitator rises and rotates; and stopping the fall of the agitator while the agitator falls and rotates.

Aspects and features of the present disclosure are not limited to the above, and other aspects and features not specifically mentioned herein will be clearly understood by those skilled in the art from the description of the present disclosure below.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 schematically illustrates an electrode assembly of a secondary battery according to some embodiments of the present disclosure;
FIG. 2 schematically illustrates a pouch-type secondary battery according to some embodiments of the present disclosure;
FIG. 3 is a cross-sectional view of a cylindrical secondary battery according to some embodiments of the present disclosure;
FIG. 4 is a cross-sectional view of a prismatic secondary battery according to some embodiments of the present disclosure;
FIG. 5 is a schematic diagram of a process of manufacturing an electrode plate of the electrode assembly illustrated in FIG. 1;
FIG. 6 is a partial cut-away schematic view of an apparatus for mixing and agitating electrode materials according to the related art;
FIG. 7 is a partial cut-away schematic view of a mixer device according to an embodiment of the present disclosure;
FIG. 8 is a schematic view of a mechanism that separately implements rotating and elevating of an agitator according to an embodiment of the present disclosure;
FIG. 9 is a schematic view of a mechanism that integrally implements rotating and elevating of the agitator according to an embodiment of the present disclosure;
FIG. 10 is a block diagram describing a rotation controller included in the rotation mechanism illustrated in FIG. 8;
FIG. 11 is a block diagram describing an elevation controller included in the elevation mechanism illustrated in FIG. 8;
FIG. 12 is a block diagram describing a rotation and elevation controller included in the rotation and elevation mechanism illustrated in FIG. 9;
FIG. 13 is a flow chart describing a basic control process of the agitator;
FIG. 14 is a flow chart describing another control process of the agitator;
FIG. 15 is a flow chart describing a modified example of the process described in FIG. 14;
FIG. 16 is a flow chart describing another modified example of the process described in FIG. 14;
FIG. 17 is a view of a secondary battery module according to some embodiments of the present disclosure;
FIG. 18 is a view of a secondary battery pack including the secondary battery module illustrated in FIG. 17; and
FIG. 19 is a schematic view of a vehicle including the secondary battery pack illustrated in FIG. 18.

### DETAILED DESCRIPTION

Hereinafter, embodiments of the present disclosure will be described, in detail, with reference to the accompanying drawings. The terms or words used in the present specification and claims are not to be narrowly interpreted based on general or dictionary meanings and should be interpreted as having meanings and encompassing concepts that are consistent with the technical idea of the present disclosure on the basis of the principle that an inventor can be his/her own lexicographer to appropriately define terms to describe his/her invention in the best way.

The embodiments described in this specification and the configurations shown in the drawings are only some of one or more embodiments of the present disclosure and do not represent all of the aspects, features, and embodiments of the present disclosure. Accordingly, it should be understood that there may be various equivalents and modifications that can replace or modify one or more embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

The controllers, control units, recognition units, communication units, and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the rotation controller, the elevation controllers, the rotation and elevation controller, and other controllers and units may be formed on one integrated circuit (IC) chip or on separate IC chips. Further, the various components of the rotation controller, the elevation controllers, the rotation and elevation controller, and other controllers and units may be implemented on a flexible printed circuit film, a tape carrier package (TCP), a printed circuit board (PCB), or formed on a same substrate as the rotation controller, the elevation controllers, the rotation and elevation controller, and other controllers and units . Further, the various components of the rotation controller, the elevation controllers, the rotation and elevation controller, and other controllers and units may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the exemplary embodiments of the present disclosure.

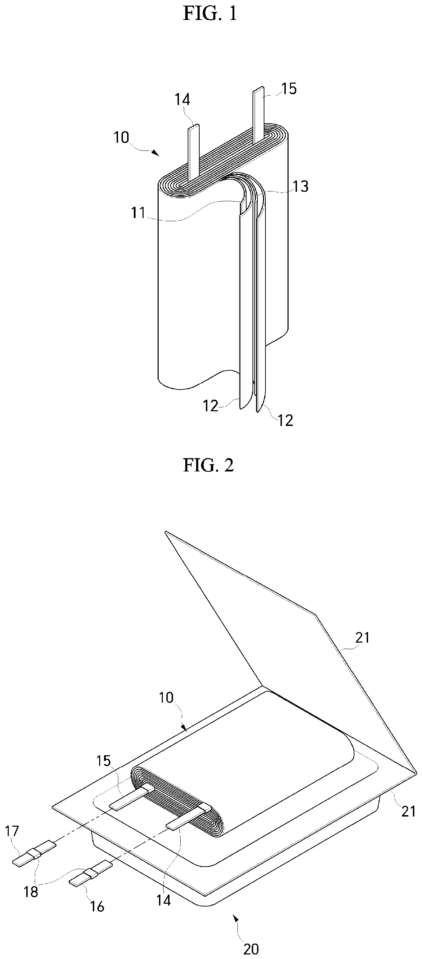

FIG. 1 shows an electrode assembly of a secondary battery according to some embodiments of the present disclosure.

An electrode assembly 10 may be formed by winding or stacking a stack of a first electrode plate 11, a separator 12, and a second electrode plate 13, which are formed as thin plates or films. When the electrode assembly 10 is a wound stack, a winding axis may be parallel to the longitudinal direction of a case. In other embodiments, the electrode assembly 10 may be a stack type rather than a winding type, but the shape of the electrode assembly 10 is not limited in the present disclosure. In addition, the electrode assembly 10 may be a Z-stack electrode assembly in which a positive electrode plate and a negative electrode plate are inserted into both sides (e.g., opposite sides) of a separator, which is then bent (or folded) into a Z-stack. In addition, one or more electrode assemblies may be stacked such that long sides of the electrode assemblies are adjacent to each other and accommodated together in the case, and the number of electrode assemblies accommodated in a case is not limited in the present disclosure. The first electrode plate 11 of the electrode assembly may act as a negative electrode, and the second electrode plate 13 may act as a positive electrode. Of course, the reverse is also possible.

The first electrode plate 11 may be formed by applying a first electrode active material, such as graphite or carbon, to a first electrode substrate formed of a metal foil, such as copper, a copper alloy, nickel, or a nickel alloy. The first electrode plate 11 may include a first electrode tab 14 (e.g., a first uncoated portion) that is a region to which the first electrode active material is not applied. The first electrode tab 14 may be connected to an external first terminal. In some embodiments, when the first electrode plate 11 is manufactured, the first electrode tab 14 may be formed by being cut in advance to protrude to (or protrude from) one side of the electrode assembly 10, or the first electrode tab 14 may protrude to one side of the electrode assembly 10 more than (e.g., farther than or beyond) the separator 12 without being separately cut.

The second electrode plate 13 may be formed by applying a second electrode active material, such as a transition metal oxide, on a second electrode substrate formed of a metal foil, such as aluminum or an aluminum alloy. The second electrode plate 13 may include a second electrode tab 15 (e.g., a second uncoated portion) that is a region to which the second electrode active material is not applied. The second electrode tab 15 may be connected to an external second terminal. In some embodiments, the second electrode tab 15 may be formed by being cut in advance to protrude to (or protrude from) the other side (e.g., the opposite side) of the electrode assembly 10 when the second electrode plate 13 is manufactured, or the second electrode tab 15 may protrude to the other side of the electrode assembly more than (e.g., farther than or beyond) the separator 12 without being separately cut.

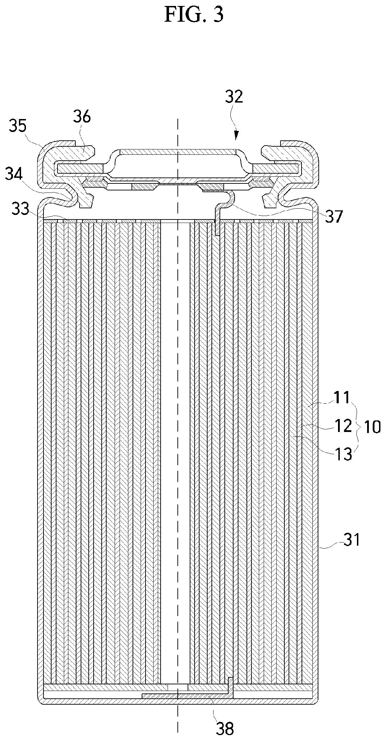

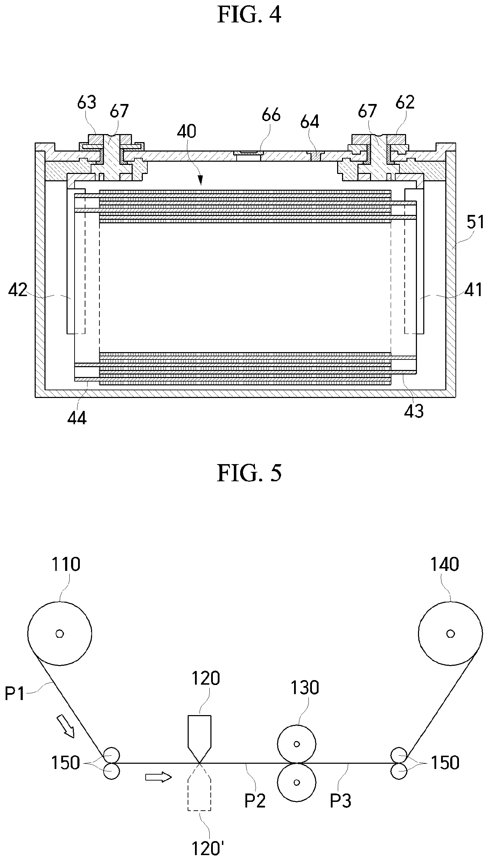

In some embodiments, the first electrode tab 14 and the second electrode tab 15 may be located on opposite sides of the electrode assembly 10 (see, e.g., FIGS. 3 and 4). In other embodiments, the first electrode tab 14 and the second electrode tab 15 may be located on one side (e.g., the same side) of the electrode assembly 10 in the same direction (see, e.g., FIGS. 1 and 2).

The separator 12 prevents a short-circuit between the first electrode plate 11 and the second electrode plate 13 while allowing for movement of lithium ions therebetween. The separator 12 may be made of, for example, a polyethylene film, a polypropylene film, a polyethylene-polypropylene film, or the like.

In some embodiments, the electrode assembly 10 may be accommodated in a case along with an electrolyte. In a pouch-type secondary battery, the electrode assembly 10 may be accommodated in a pouch made of flexible material having the form illustrated in, for example,

FIG. 2. In a cylindrical or prismatic secondary battery, the electrode assembly 10 may be accommodated in a cylindrical or prismatic metal casing having the form illustrated in, for example, FIGS. 3 and 4.

FIG. 2 schematically illustrates a pouch-type secondary battery according to some embodiments of the present disclosure.

The pouch-type secondary battery includes the electrode assembly 10 and a pouch 20 that accommodates the electrode assembly 10.

The electrode assembly 10 is the same as that illustrated in FIG. 1. The first electrode tab 14 and the second electrode tab 15 of the electrode assembly 10 may be electrically connected to respective external first and second terminal leads 16 and 17 by welding. Each of the first terminal lead 16 and the second terminal lead 17 may be attached with a tab film 18 to be insulated from the pouch 20.

The pouch 20 may be sealed by having sealing parts 21 at the edges thereof come into contact with each other while accommodating the electrode assembly 10 therein, and the sealing may be achieved with the tab film 18 interposed between the sealing parts 21. The sealing parts 21 of the pouch 20 may each be made of a thermal fusion material that generally exhibits weak adhesion to metal. Thus, the thin tab film 18 may be fused to the pouch 20 by interposing the thin tab film 18 between the sealing parts 21.

FIG. 3 illustrates a cylindrical secondary battery according to some embodiments of the present disclosure. As shown in FIG. 3, a secondary battery may include an electrode assembly 10, a case 31 accommodating the electrode assembly 10 and an electrolyte therein, a cap assembly 32 coupled to an opening in the case 31 to seal the case 31, and an insulating plate 33 positioned between the electrode assembly 10 and the cap assembly 32 inside the case 31.

The case 31 accommodates the electrode assembly 10 and the electrolyte, and, together with the cap assembly 32, forms the external appearance of the secondary battery. The case 31 may have a substantially cylindrical body portion and a bottom portion connected to (e.g., at) one side (e.g., at one end) of the body portion. A beading part 34 (e.g., a bead) deformed inwardly may be formed in the body portion, and a crimping part 35 (e.g., a crimp) bent inwardly may be formed at an open end of the body portion.

The beading part 34 can reduce or prevent movement of the electrode assembly 10 inside the case 31 and can facilitate seating of the gasket and the cap assembly 32. The crimping part 35 may firmly fix the cap assembly 32 by pressing the edge of the case 31 against the gasket 36. The case 31 may be formed of iron plated with nickel, for example.

The cap assembly 32 may be fixed by the inside of the crimping part 35 with a gasket 36 interposed therebetween to seal the case 31. A first lead tab 37 drawn out from the electrode assembly 10 may be connected to the cap assembly 32, and a second lead tab 38 drawn out from the electrode assembly 10 may be electrically connected to the bottom of the casing 31.

FIG. 4 is a cross-sectional view of a prismatic secondary battery according to some embodiments of the present disclosure.

As shown in FIG. 4, a prismatic secondary battery may include an electrode assembly 40, a first current collector 41, a first terminal 62, a second current collector 42, a second terminal 63, a case 51, and a cap assembly 60.

An electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction of the case 51. In other embodiments, the electrode assembly 40 may be a stack type rather than a winding type, but the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent (or folded) into a Z-stack. In addition, one or more electrode assemblies may be stacked such that long sides of the electrode assemblies are adjacent to each other and accommodated together in the case, and the number of electrode assemblies in the case is not limited in the present disclosure. The first electrode plate of the electrode assembly may act as a negative electrode, and the second electrode plate may act as a positive electrode. Of course, the reverse is also possible.

In the electrode assembly 40, the first current collector 41 and the second current collector 42 may be welded and connected to the first electrode tab 43 extending from the first electrode plate and the second electrode tab 44 extending from the second electrode plate, respectively. As described above, in embodiments in which the first electrode tab 43 and the second electrode tab 44 are located at the top of the electrode assembly 40, the first and second current collectors are located at the top of the electrode assembly 40.

As illustrated in FIG. 4, the first current collector 41 and the second current collector 42 are connected to the first terminal 62 and the second terminal 63 through connection members 67, respectively. In some embodiments, the connection members 67 may each have a threaded outer peripheral surface and may be fastened to the first terminal 62 and the second terminal 63 by screwing. However, the present disclosure is not limited thereto. For example, in other embodiments, the connection members 67 may be coupled to the first terminal 62 and the second terminal 63 by riveting or welding.

FIG. 5 is a schematic diagram of a process for manufacturing the electrode plate (e.g., the first electrode plate 11 or the second electrode plate 13) of the electrode assembly 10 illustrated in FIG. 1.

A supply roll 110 is a roll on which a substrate P1 for an electrode plate is wound. When an apparatus for manufacturing electrode plates according to an embodiment of the present disclosure is used to manufacture a positive electrode plate, the substrate P1 may be a metal foil including (or containing) aluminum (Al), for example. When the apparatus for manufacturing electrode plates according to an embodiment of the present disclosure is used to manufacture a negative electrode plate, the substrate P1 may be a metal foil including (or containing) copper (Cu) or nickel (Ni).

A transfer roller 150 may be an idle roller that guides the substrate P1 as it is unwound from the supply roll 110 or a drive roller that applies a pulling force to allow the substrate P1 to be unwound from the supply roll 110. FIG. 5 illustrates an embodiment including a total of four transfer rollers 150 as an example, and the number and positions of transfer rollers may be varied.

A coating unit 120 forms a coating layer by coating the substrate P1 with an electrode material slurry that is previously prepared. Both surfaces, namely the upper and lower surfaces, of the substrate P1 may be concurrently or simultaneously coated by a second coating unit 120', which has the same configuration as the coating unit 120 illustrated in FIG. 5, at the lower surface of the substrate P1.

The electrode materials to be coated may be in a slurry state in which an active material, a conductive material, a binder, other additives, and/or a solvent have been mixed or may be in a powder state in which an active material, a conductive material, a binder, and/or other additives have been mixed without a solvent. The active material may be a substance that activates an electrode reaction of a secondary battery in a positive electrode and a negative electrode. For example, the active material may refer to an active material that generates electric energy through a chemical reaction. The conductive material may be an additive substance for increasing the conductivity of an active material. The binder acts to fix or bond an active material to a substrate. Other additives are substances that are added for the purpose of reducing (or improving) charging speed, improving energy density, and to provide a stabilize battery. The solvent may be a fluid that is necessary to convert an active material, a conductive material, and/or other additives into a slurry state. From among processes of manufacturing electrode materials, a solvent may be used in a wet process but may be omitted in a dry process.

A press unit (e.g., a rolling unit) 130 uses a rolling roller to compress an electrode plate P2 coated with the slurry (mixture) by the coating unit 120 to produce a high-capacity and high-density secondary battery.

A winding roll 140 is a roll that winds and accommodates an electrode plate P3 coated and rolled by the coating unit 120 and the press unit 130.

In some embodiments, a drying unit may be included between the coating unit 120 and the winding roll 140 to dry and/or solidify the electrode plate P2 coated with the slurry. The drying unit may include a heat source. In various embodiments, the drying unit may be physically separated from or may be functionally integrated into the press unit 130. For example, when the press unit 130 is configured in the form of a roller, the roller may be equipped with a heat source to simultaneously heat and roll the coating layer, thereby allowing the press unit 130 to also act as a drying unit.

Hereinafter, example materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); or LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material may be in a range of about 90 wt% to about 99.5 wt% on the basis of 100 wt% of the positive electrode active material layer, and the content of the binder and the conductive material may be in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer formed on the substrate. The negative electrode active material layer may include a negative electrode active material and may further include a binder and/or a conductive material.

For example, the content of the negative electrode active material layer may be about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). The separator may include (or may be formed of) polyethylene, polypropylene, polyvinylidene fluoride, or may be a multilayer film including two or more layers thereof.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are laminated on each other.

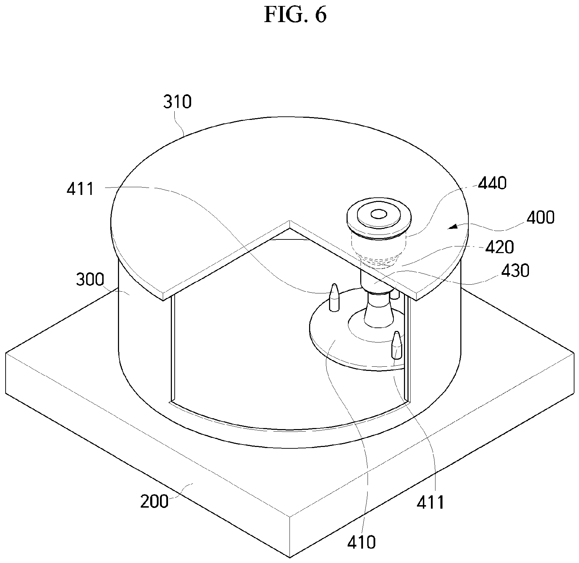

FIG. 6 is a partial cut-away schematic view of an apparatus for mixing and agitating electrode materials (hereinafter, also referred to as "mixer" or "mixer device") according to the related art. The mixer device illustrated in FIG. 6 is an example of a planetary disperser (PD) mixer that includes a rotor to mix and agitate materials while rotating and revolving in the rotating vessel thereof.

The mixer device includes a vessel 300 that is coupled to a base 200 with a built-in mixer drive system, such as a motor, an actuator, and a gear, and accommodates a secondary battery electrode material, a vessel upper cover 310, and a rotor assembly 400 that is located inside the vessel 300 and rotated by the drive system built into the base 200. The rotor assembly 400 includes an agitator 410 including a plurality of agitating pins a rotary shaft 420, a rotary shaft coupling part 430, and a revolution guide 440.

The rotor assembly 400 rotates about the rotary shaft 420 to cause the agitating pins 411 to move in a circle in a region to act as agitation (e.g., to act as an agitator). At the same time, the rotor assembly 400 revolves in a contour similar to (e.g., corresponding to) the inner wall of the vessel 300 to cause the circular region covered by the agitating pins 411 to move around the inner surface of the vessel 300. Depending on the type of mixer, the vessel 300 may also rotate on its own. The revolution guide 440 is pivotably coupled to the vessel upper cover 310 to act as a guide for the revolution of the agitator 410.

The agitating pins 411 attached to the agitator 410 typically consist of three pins protruding at the same height, each of which has a height of about 200 mm. The agitator 410 has a diameter of about 740 mm.

The mixer illustrated in FIG. 6 provides a certain level of mixing efficiency based on the rotor assembly 400 rotating and revolving in the vessel 300 and based on the vessel 300 rotating. However, the rotor assembly 400 rotates only horizontally, making it difficult to disturb the vertical distribution of the material (e.g., making it difficult to vertically mix the material). Moreover, the mixer has a structural limitation in that the agitating pins 411 have the same length and are smaller than the height of the vessel 300, which is insufficient to sufficiently mix and agitate the material at a distance away from (e.g., not in contact with) the agitating pins.

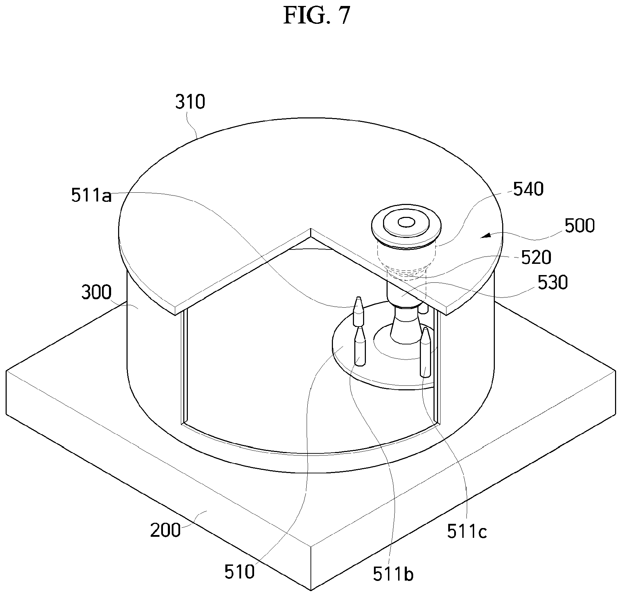

FIG. 7 is a partial cut-away schematic view of a mixer device according to an embodiment of the present disclosure.

The mixer device according to an embodiment of the present disclosure includes a vessel 300 that is coupled to a base 200 with a built-in mixer drive system, such as a motor, an actuator, and a gear, and accommodates a secondary battery electrode material, a vessel upper cover 310, and a rotor assembly 500 that is located inside the vessel 300 and is rotated by the drive system built into the base 200. The rotor assembly 500 may include an agitator 510 including a plurality of agitating pins 511a, 511b, and 511c protruding at different heights to agitate the material in the vessel 300, a rotary shaft 520 of the agitator 510, a rotary shaft coupling part 530 coupled to the rotary shaft 520 to move the agitator 510 up and down (e.g., to reciprocate vertically), and a revolution guide 540 connected to the rotary shaft 520 of the agitator 510 to guide the agitator 510 to revolve along the inner surface of the vessel 300.

The agitator 510 of the rotor assembly 500 may rotate about the rotary shaft 520 to cause the agitating pins 511a, 511b, and 511c to move in a circle in a region to provide high efficiency agitation. With this rotation, the revolution guide 540 may be pivotably coupled to the vessel upper cover 310 to guide the agitator 510 to revolve in a contour similar to (e.g., corresponding to) the inner wall of the vessel 300 to cause the circular motion of the agitating pins 511a, 511b, and 511c to revolve around the inner surface of the vessel 300. As in the conventional PD mixer, the vessel 300 may also rotate on its own.

As such, the mixer according to an embodiment of the present disclosure differentiates the heights of the agitating pins 511a, 511b, and 511c protruding from the agitator 510 to increase the dispersion efficiency of the material and moves the agitator 510 up and down to disperse the material vertically as well as horizontally. In addition, the mixer according to an embodiment of the present disclosure further increases mixing dispersion efficiency by enlarging the diameter of the agitator 510 to expand the region covered by rotation of the agitating pins 511a, 511b, and 511c.

According to an embodiment, the agitating pins 511a, 511b, and 511c of the agitator 510 each have a height greater than the existing 200 mm. For example, the first agitating pin 511a may have a height of approximately 150 mm to approximately 250 mm, the second agitating pin 511b may have a height of approximately 250 to approximately 350 mm, and the third agitating pin 511c may have a height of approximately 350 mm. This increases the range of agitation for the vertical distribution of the material. In addition, the range of horizontal agitation of the material may be expanded by enlarging the diameter of the agitator 510 from the existing 740 mm to approximately 800 mm to approximately 950 mm or enlarging the diameter of the agitator 510, which was previously 50% of the inner diameter of the existing vessel 300, to about 50% to about 80%.

Furthermore, embodiments of the present disclosure actively expand the range of vertical agitation of the material by applying a vertical movement (elevation) mechanism in addition to the rotation and revolution of the agitator 510. The rotation and vertical movement (elevation) mechanism of the agitator 510 will be described in detail below.

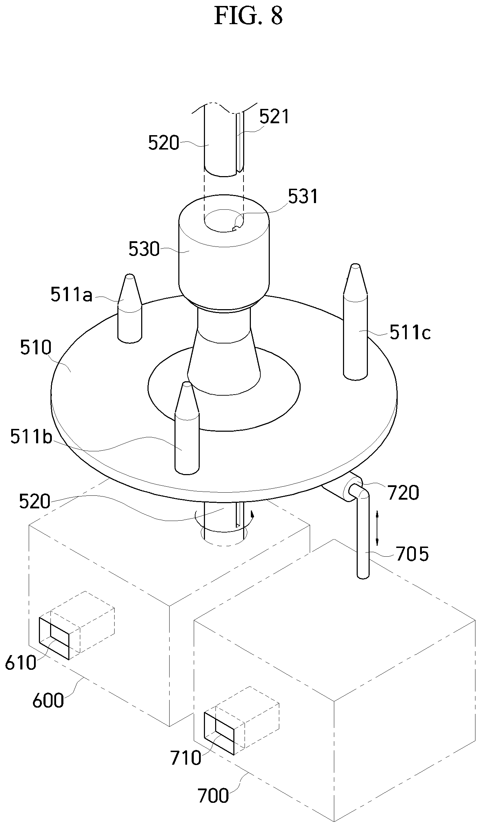

FIG. 8 illustrates an embodiment of the mechanism that separately implements rotating and elevating of the agitator 510 according to embodiments of the present disclosure.

This mechanism may include a rotary shaft 520 rotated by a rotation mechanism 600, a rotary shaft coupling part 530 for coupling the agitator 510 to the rotary shaft 520, and an elevation mechanism 700 that moves the agitator 510, coupled to the rotary shaft 520 by the rotary shaft coupling part 530, up and down. A key groove 521 may be formed longitudinally on the outer diameter of the rotary shaft 520, and a key 531 to be coupled to the key groove 521 may be formed on the inner diameter of the rotary shaft coupling part 530.

As such, the key 531 of the rotary shaft coupling part 530 is coupled to the key groove 521 in the rotary shaft 520, and the agitator 510 is connected to the rotary shaft coupling part 530. Thus, the agitator 510 may rotate along with (or according to) the rotation of the rotary shaft 520 by the rotation mechanism 600 while elevating (e.g., while vertically reciprocating) by an elevation stem 705 that comes out of the elevation mechanism 700 and moves up and down. In other words, the rotary shaft 520 may primarily rotate the agitator 510 while having little, if any, involvement in the elevation of the agitator 510, and the elevation of the agitator 510 may be primarily accomplished by the elevation stem 705. To facilitate elevation during rotation of the agitator 510, a roller 720 may be installed at the end of the elevation stem 705 of the elevation mechanism 700 to maintain the rotation of the agitator 510 without interfering with it.

FIG. 8 illustrates an embodiment in which the rotation mechanism 600 includes a rotation controller 610 and the elevation mechanism 700 includes an elevation controller 710. The rotation controller 610 and the elevation controller 710 may be implemented based on a computer system and software program and may be configured to enable autonomous operation or operation by an operator. The rotation controller 610 and the elevation controller 710 will be described later.

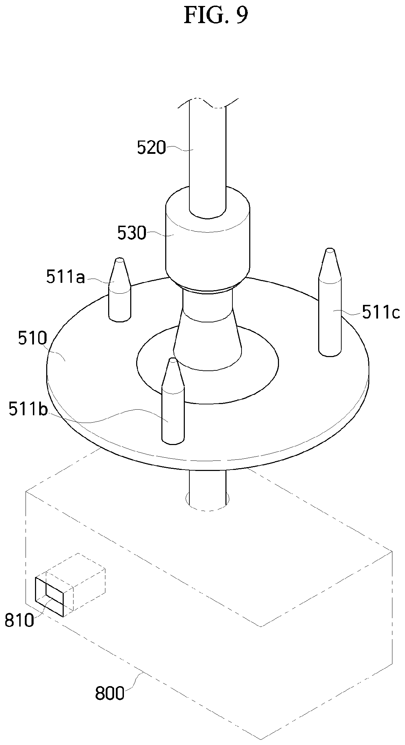

FIG. 9 illustrates an embodiment of the mechanism that integrally implements rotating and elevating of the agitator 510 according to an embodiment of the present disclosure.

This mechanism may include a rotary shaft 520 rotated and elevated by a rotation and elevation mechanism 800, a rotary shaft coupling part 530 for coupling the agitator 510 to the rotary shaft 520, and the rotation and elevation mechanism 800 that rotates and elevates the agitator 510 coupled to the rotary shaft 520 by the rotary shaft coupling part 530.

In this embodiment, the rotary shaft 520 and the agitator 510 may be connected by the rotary shaft coupling part 530, and the rotary shaft 520 may be simultaneously rotated and elevated by the rotation and elevation mechanism 800. The rotation and elevation mechanism 800 may be designed to simultaneously rotate and elevate one rotary shaft 520 by using mechanical elements, such as a main shaft, a cam, and a gear.

FIG. 9 illustrates an embodiment in which the rotation and elevation mechanism 800 includes a rotation and elevation controller 810. The rotation and elevation controller 810 may be implemented based on a computer system and software program and may be configured to enable autonomous operation or operation by an operator. The rotation and elevation controller 810 will be described later.

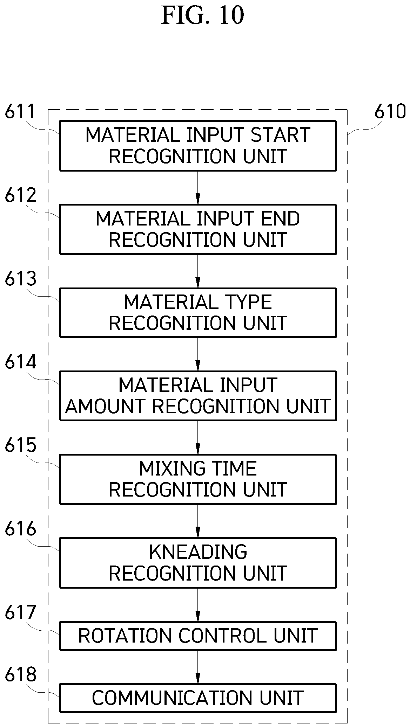

FIG. 10 is a block diagram describing the rotation controller 610 included in the rotation mechanism 600 illustrated in FIG. 8.

The rotation controller 610 controls the rotation of the agitator 510 and may include a rotation control unit 617 that controls the rotation of the agitator 510.

The rotation controller 610 may also include at least one of a material input start recognition unit 611 that recognizes (or determines) a point of time when a material is input into the vessel 300, a material input end recognition unit 612 that recognizes (or determines) a point of time when the input of the material ends, a material type recognition unit 613 that recognizes (or determines) a type of material, a material input amount recognition unit 614 that recognizes (or determines) an amount of input material, a mixing time recognition unit 615 that recognizes (or determines) a time required to mix the material, and a kneading recognition unit 616 that recognizes (or determines) the completion of kneading of the material. It may further include a communication unit 618 that communicates with the elevation controller 710 to exchange information.

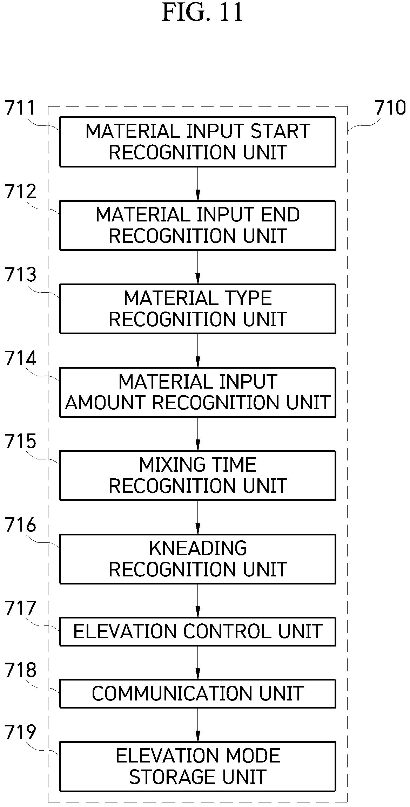

FIG. 11 is a block diagram describing the elevation controller 710 included in the elevation mechanism 700 illustrated in FIG. 8.

The elevation controller 710 controls the elevation of the agitator 510 and may include an elevation control unit 717 that controls the elevation of the agitator 510.

Similar to the rotation controller 610, the elevation controller 710 may also include at least one of a material input start recognition unit 711 that recognizes (or determines) a point of time when a material is input into the vessel 300, a material input end recognition unit 712 that recognizes (or determines) a point of time when the input of the material ends, a material type recognition unit 713 that recognizes (or determines) a type of material, a material input amount recognition unit 714 that recognizes (or determines) an amount of input material, a mixing time recognition unit 715 that recognizes (or determines) a time required to mix the material, and a kneading recognition unit 716 that recognizes (or determines) the completion of kneading of the material. The elevation controller 710 may further include a communication unit 718 that communicates with the rotation controller 610 to exchange information, and an elevation mode storage unit 719 that stores at least one of various patterns or modes.

In one embodiment, the material input start recognition unit 711, the material input end recognition unit 712, the material type recognition unit 713, the material input amount recognition unit 714, the mixing time recognition unit 715, and the kneading recognition unit 716 may perform the same functions as the material input start recognition unit 611, the material input end recognition unit 612, the material type recognition unit 613, the material input amount recognition unit 614, the mixing time recognition unit 615, and the kneading recognition unit 616 included in the rotation controller 610. Accordingly, these recognition units 711, 712, 713, 714, 715, and 716 may receive the various types of information through communication between the communication unit 618 of the rotation controller 610 and the communication unit 718 of the elevation controller 710, instead of recognizing them, in which case the recognition units 711, 712, 713, 714, 715, and 716 may be removed from the elevation controller 710. In other words, the rotation controller 610 and the elevation controller 710 may each independently perform material input start recognition, material input end recognition, material type recognition, material input amount recognition, mixing time recognition, and kneading recognition, and the material input start information, material input end information, material type information, material input amount information, mixing time information, and kneading information recognized by any one of the controllers 610 and 710 may be shared with the other of the controllers 610 and 710.

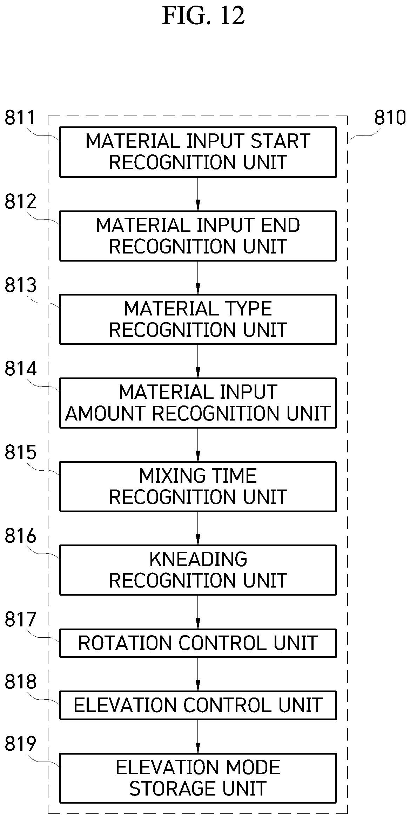

FIG. 12 is a block diagram describing the rotation and elevation controller 810 included in the rotation and elevation mechanism 800 illustrated in FIG. 9.

The rotation and elevation controller 810 has an integrated configuration of the rotation controller 610 and the elevation controller 710, which are separated from each other in the embodiment shown in FIG. 8. Accordingly, the rotation and elevation controller 810 may include a material input start recognition unit 811 that recognizes (or determines) a point of time when a material is input into the vessel 300, a material input end recognition unit 812 that recognizes (or determines) a point of time when the input of the material ends, a material type recognition unit 813 that recognizes (or determines) a type of material, a material input amount recognition unit 814 that recognizes (or determines) an amount of input material, a mixing time recognition unit 815 that recognizes (or determines) a time required to mix the material, a kneading recognition unit 816 that recognizes (or determines) the completion of kneading of the material, a rotation control unit 817 that controls the rotation of the agitator 510, an elevation control unit 818 that controls the elevation of the agitator 510, and an elevation mode storage unit 819 that stores at least one of various patterns or modes. Because the rotation controller 610 and the elevation controller 710 are integrated (e.g., are integrally formed), the communication units 618 and 718 for data exchange between them may be omitted.

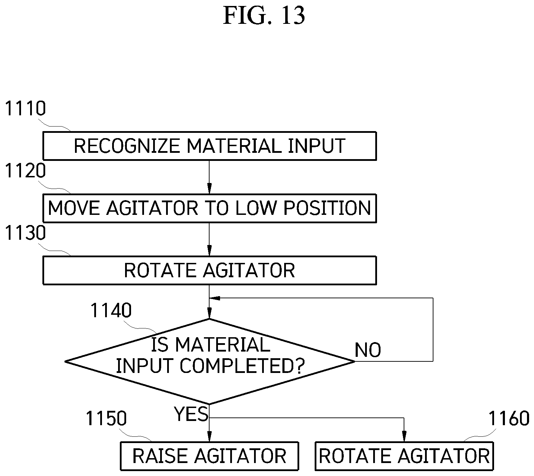

FIGS. 13 to 16 are flow charts describing cooperative control methods that may be performed by the rotation controller 610 and the elevation controller 710 illustrated in FIGS. 10 and 11 and/or an integrated control method that may be performed by the rotation and elevation controller 810 illustrated in FIG. 12.

FIG. 13 describes a basic control method of the agitator 510.

First, in the schematic process shown in FIG. 13, when a material begins to be input into the vessel 300, the agitator 510 moves to a position (e.g., a low position) close to the bottom surface of the vessel 300 and rotates to start mixing at this low position. When the input of the material is completed during mixing in the agitator 510, the agitator 510 rises during rotation (or while rotating) while agitating the upper part of the input material. The determination of completion of material input may include determining when kneading of the mixture of material is completed. In this embodiment, the rotation controller 610, the elevation controller 710, and the rotation and elevation controller 810 may include kneading recognition units 616, 716, and 816.

Now, the process shown in FIG. 13 will be described as follows.

Reference numeral 1110 refers to a step of recognizing (or determining) start of input of material into the vessel 300. This step may be performed by the material input start recognition unit 611 of the rotation controller 610, the material input start recognition unit 711 of the elevation controller 710, or the material input start recognition unit 811 of the rotation and elevation controller 810.

Reference numeral 1120 refers to a step of moving the agitator 510 from its current (e.g., stationary) position to a low position close to the bottom of the vessel 300. The movement of the agitator 510 to the low position may be performed by the elevation control unit 717 of the elevation controller 710 or the elevation control unit 818 of the rotation and elevation controller 810. The low position to which the agitator 510 is to move may be set in advance.

Reference numeral 1130 refers to a step of rotating the agitator 510 moved to the low position to mix the material being input. This may be performed by the rotation control unit 617 of the rotation controller 610 or the rotation control unit 817 of the rotation and elevation controller 810.

Reference numeral 1140 refers to a step of checking (or determining) whether or not the input of the material is completed. This may be performed by the material input end recognition unit 612 of the rotation controller 610, the material input end recognition unit 712 of the elevation controller 710, or the material input end recognition unit 812 of the rotation and elevation controller 810.

Reference numerals 1150 and 1160 refer to steps in which, when the input of the material into the vessel 300 is completed, the agitator 510 rises and rotates at the same time to continue mixing while moving up to the upper part of the material. The agitator 510 may be set to have a rate of rise of about 1 mm/min to about 10 mm/min (in one embodiment, about 5 mm/min).

In other embodiments, the checking (or determining) whether or not the input of the material is completed in step 1140 of the above process may include a step of checking completion of kneading. For example, steps 1150 and 1160 may be carried out when the kneading recognition unit 616 of the rotation controller 610, the kneading recognition unit 716 of the elevation controller 710, or the kneading recognition unit 816 of the rotation and elevation controller 810 recognizes that the kneading of the input material is completed.

The point of time of rise and fall of the agitator, method thereof, or the like may be controlled in different ways.

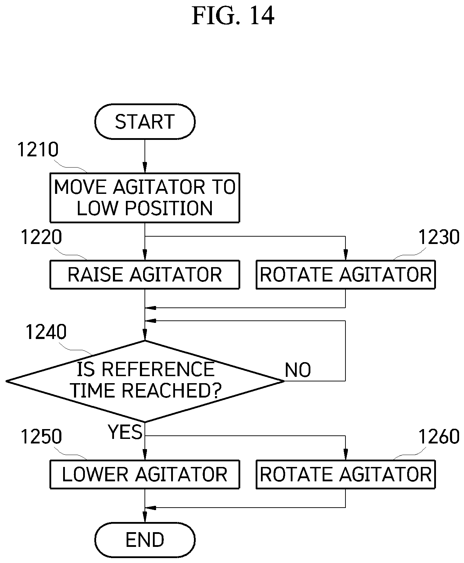

FIG. 14 describes a process in which the agitator 510 rises for a first time and then rotates while falling (e.g., lowering) for a second time during the mixing by the agitator 510.

Reference numeral 1210 refers to a step of moving the agitator 510 from its current (e.g., stationary) position to a low position. The movement of the agitator 510 to the low position may be performed by the elevation control unit 717 of the elevation controller 710 or the elevation control unit 818 of the rotation and elevation controller 810. The low position to which the agitator 510 is to move may be set in advance.

Reference numerals 1220 and 1230 refer to steps in which the agitator 510 moved to the low position simultaneously rises and rotates to mix the vertical distribution of (e.g., to vertically mix) the material while moving up. These steps may be performed by the elevation control unit 717 of the elevation controller 710 or the elevation control unit 818 of the rotation and elevation controller 810, and the rotation control unit 617 of the rotation controller 610 or the rotation control unit 817 of the rotation and elevation controller 810. The agitator 510 may be set to have a rate of rise of about 1 mm/min to about 10 mm/min (in one embodiment, about 5 mm/min).

Reference numeral 1240 refers to a step of checking (or determining) whether or not a reference time (e.g., a predetermined time) is reached while the agitator 510 rises and rotates. This step may be performed by the mixing time recognition unit 615 of the rotation controller 610, the mixing time recognition unit 715 of the elevation controller 710, or the mixing time recognition unit 815 of the rotation and elevation controller 810. The reference time may be set as a time corresponding to about 30% to about 70% (in one embodiment, about 50%) of the total mixing time in the established mixing recipe. For example, if the total mixing time is established to be 60 minutes in the mixing recipe, the reference time may be 30 minutes.

Reference numerals 1250 and 1260 refer to steps in which, when it is recognized (or determined) that the reference time is reached, the agitator 510 falls and rotates at the same time to perform mixing while moving down along the vertical distribution of the material. The agitator 510 may be set to have a rate of fall of about 1 mm/min to about 10 mm/min (in one embodiment, about 5 mm/min), similar to the above rate of rise. However, this rate of fall may be set differently from (e.g., may differ from) the above rate of rise.

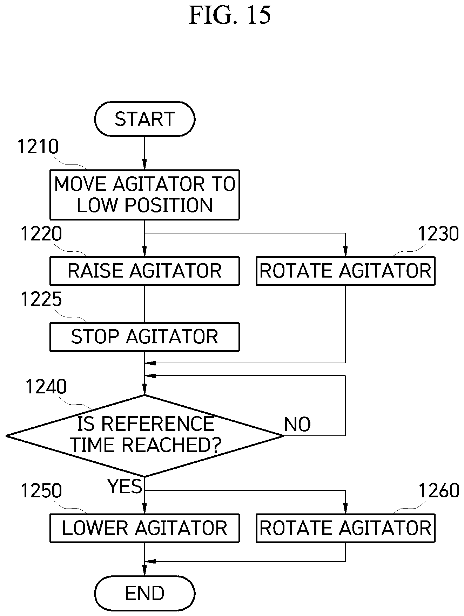

FIG. 15 describes a process that differs from that shown in FIG. 14.

The process shown in FIG. 15 further includes a step of stopping the rise of the agitator 510 (1225) while the agitator 510 moves to the low position in step 1210 and the agitator 510 rises and rotates in steps 1220/1230. For example, in the step of stopping the rise of the agitator (1225), the agitator 510 only rotates at its stop (or stopped) position (1230) to mix the material at that position. Then, when the reference time is reached in step 1240, the agitator 510 falls (1250) while continuing to rotate (1260) at that position.

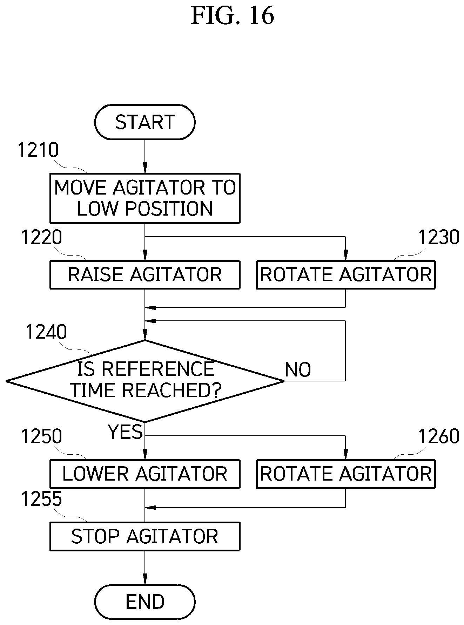

FIG. 16 describes another process that differs from that shown in FIG. 14.

Similar to the process shown in FIG. 14, the agitator 510 moves to the low position in step 1210, the agitator 510 rises (1220) and rotates (1230) from the low position to mix the material, determines whether or not the reference time is reached in step 1240, and, if yes, the agitator 510 falls and rotates to continue mixing in step 1250.

However, the process shown in FIG. 16 further includes a step of stopping the fall of the agitator (1255) while the agitator 510 falls and rotates. In other words, in the step of stopping the fall of the agitator (1255), the agitator 510 only rotates at its stop (or stopped) position (1260) to mix the material at that position.

In various other embodiments, the rates of rise and fall of the agitator 510 may be set differently (and differently from each other) depending on the type of input material. For example, for high-viscosity materials, it is possible to increase dispersion efficiency by setting the rates of rise and fall slower, and for low-viscosity materials, it is possible to shorten the mixing time by setting the rates of rise and fall faster.

In other embodiments, the rates of rise and fall of the agitator 510 may be set differently depending on the amount of material input. For example, if the amount of material input is large, it is possible to increase dispersion efficiency by setting the rates of rise and fall slower, and if the amount of material input is small, it is possible to shorten the mixing time by setting the rates of rise and fall faster.

In other embodiments, the mixer device may be configures such that the elevation pattern (e.g., elevation speed, elevation transition point, stop time during elevation, and/or the like) of the agitator 510 is stored as at least one of various elevation mode presets and selected by the operator or is automatically selected. For this purpose, the elevation controller 710 and the rotation and elevation controller 810 may include the elevation mode storage units 719 and 819.

The rotation controller 610, the elevation controller 710, the rotation and elevation controller 810, the interaction function with the operator, and the like described above may be implemented based on the computer system and/or the software program.

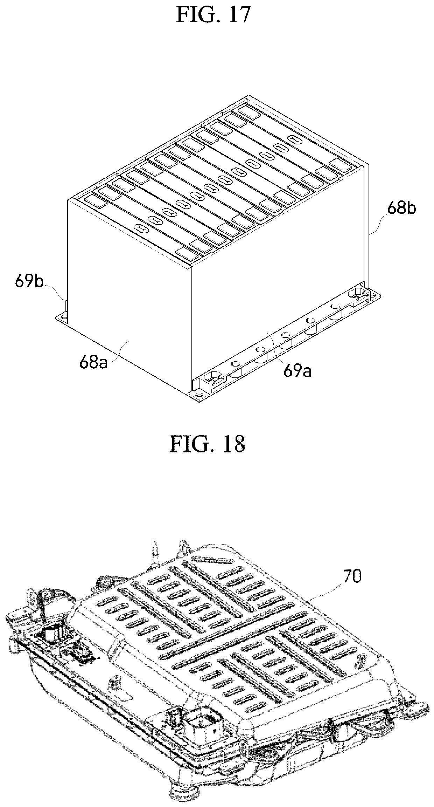

FIG. 17 is an schematic view of a secondary battery module in which prismatic secondary batteries are arranged according to embodiments of the present disclosure. With the increase in secondary battery capacity for driving electric vehicles or the like, a secondary battery module may be manufactured by transversely and/or longitudinally arranging and connecting a plurality of secondary battery cells together. The plurality of secondary batteries may be arranged in a space defined by a pair of facing end plates 68a and 68b and a pair of facing side plates 69a and 69b. The secondary batteries may be designed appropriately in arrangement (or direction) and number to obtain a desired voltage and current output.

FIG. 18 is a schematically view of a battery pack 70 according to embodiments of the present disclosure. Referring to FIG. 18, a battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

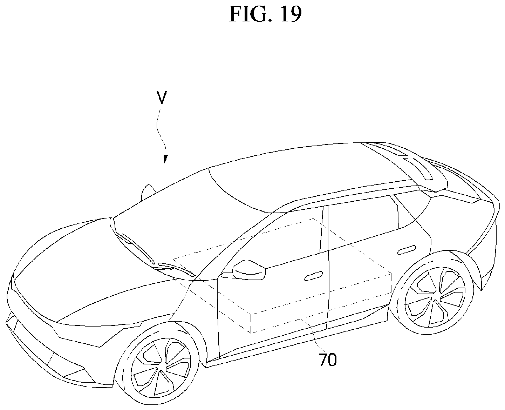

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 19 shows a vehicle V which includes the battery pack 70 shown in FIG. 18 on the lower body thereof. The vehicle V may operate by (e.g., may be powered by) receiving power from the battery pack 70.

As is apparent from the above description, the mixing time of secondary battery electrode materials may be shorted (or reduced) by improving the structure of the mixer device for secondary battery electrode material to enlarge the diameter of the agitator, apply multiple agitating pins with different heights, and move the agitator up and down to increase the dispersion efficiency of the material and, thus, to improve mixing quality (e.g., uniform dispersion of the material).

Although the present disclosure has been described above with respect to embodiments thereof, the present disclosure is not limited thereto. Various modifications and variations can be made thereto by those skilled in the art within the scope of the present disclosure, the appended claims, and their equivalents.

### DESCRIPTION OF SOME REFERENCE SYMBOLS

10: electrode assembly, 11: first electrode plate, 12: separator, 13: second electrode plate, 14: first electrode tab, 15: second electrode tab, 16: first terminal lead, 17: second terminal lead, 18: tab film, 20: pouch, 21: sealing part, 31: casing, 32: cap assembly, 33: insulating plate, 34: beading part, 35: crimping part, 36: gasket, 37: first lead tab, 38: second lead tab, 40: electrode assembly, 41: first current collector, 42: second current collector, 43: first electrode tab, 44: second electrode tab, 51: casing, 61: cap plate, 62: first terminal, 63: second terminal, 64: electrolyte injection port, 65: notch, 66: vent, 67: connection member, 68a, 68b: end plate, 69a, 69b: side plate, 70: secondary battery pack, 110: supply roll, 120, 120': coating unit, 130: press unit, 140: winding roll, 150: transfer roller, 200: base, 300: vessel, 310: upper cover, 400: rotor assembly, 410: agitator, 411: agitating pin, 420 : rotary shaft, 430: rotary shaft coupling part, 440: revolution guide, 500: rotor assembly, 510: agitator, 511a, 511b, 511c: agitating pin, 520: rotary shaft, 521: key groove, 530: rotary shaft coupling part, 531: key, 540: revolution guide, 600: rotation mechanism, 610: rotation controller, 700: elevation mechanism, 705: elevation stem, 710: elevation controller, 720: roller, 800: rotation and elevation mechanism, 810: rotation and elevation controller, P1: substrate, P2: electrode plate coated with electrode material, P3: rolled electrode plate, V: vehicle

## Claims

1. An apparatus for mixing and agitating secondary battery electrode materials, the apparatus comprising:
a vessel (300) configured to accommodate secondary battery electrode material;
an agitator (510) configured to rotate and elevate to agitate the material in the vessel (300);
a rotation controller (610) configured to control the rotation of the agitator (510); and
an elevation controller (710) configured to control the elevation of the agitator (510).

2. The apparatus as claimed in claim 1, wherein the agitator (510) comprises a plurality of agitating pins (511a, 511b, 511c) protruding at different lengths with respect to one another.

3. The apparatus as claimed in claim 1 or 2, wherein the agitating pins (511a, 511b, 511c) comprise a first agitating pin (511a) having a protruding length in a range of 150 to 250 mm, a second agitating pin (511b) having a protruding length in a range of 250 to 350 mm, and a third agitating pin (511c) having a protruding length in a range of 350 to 450 mm.

4. The apparatus as claimed in any of the preceding claims, wherein the agitator (510) has a diameter in a range of 800 to 950 mm.

5. The apparatus as claimed in any of the preceding claims, wherein the agitator (510) has a diameter that is in a range of 50% to 80% of an inner diameter of the vessel (300).

6. The apparatus as claimed in any of the preceding claims, wherein the agitator (510) is configured to rotate and revolve.

7. The apparatus as claimed in any of the preceding claims, wherein the rotation controller (610) comprises at least one of
a material input start recognition unit (611, 711, 811) configured to determine a point of time when the material is input into the vessel (300),
a material input end recognition unit (612, 712, 812) configured to determine a point of time when the input of the material ends, a material type recognition unit (613, 713, 813) configured to determine a type of material,
a material input amount recognition unit (614, 714, 814) configured to determine an amount of the input material,
a mixing time recognition unit (615, 715, 815) configured to determine a time required to mix the material, and
a kneading recognition unit (616, 716, 816) configured to determine completion of kneading of the material.

8. The apparatus as claimed in claim 7, wherein the rotation controller (610) further comprises a communication unit (618, 718) configured to communicate with the elevation controller (710) to exchange information.

9. The apparatus as claimed in any of the preceding claims, wherein the elevation controller (710) comprises at least one of
a material input start recognition unit (611, 711, 811) configured to determine a point of time when the material is input into the vessel (300),
a material input end recognition unit (612, 712, 812) configured to determine a point of time when the input of the material ends, a material type recognition unit (613, 713, 813) configured to determine a type of material,
a material input amount recognition unit (614, 714, 814) configured to determine an amount of the input material,
a mixing time recognition unit (615, 715, 815) configured to determine a time required to mix the material, and a kneading recognition unit (616, 716, 816) configured to determine completion of kneading of the material.

10. The apparatus as claimed in claim 9, wherein the elevation controller (710) further comprises a communication unit (618, 718) configured to communicate with the rotation controller (610) to exchange information.

11. The apparatus as claimed in claim 9 or 10, wherein the elevation controller (710) further comprises an elevation mode storage unit (719, 819) configured to store an elevation mode.

12. A method of controlling an apparatus for mixing and agitating secondary battery electrode materials of any of claims 1 to 11, the apparatus being controlled by a computer processor, the method comprising, by the processor:
recognizing start of input of the material into the vessel (300);
moving the agitator (510) to a low position close to a bottom of the vessel (300);
rotating the agitator (510) that is in the low position to mix the material;
determining whether or not the input of the material is completed; and
rotating the agitator (510) while raising it toward an upper part of the material when the input of the material is completed.

13. The method as claimed in claim 12, wherein the determine whether or not the input of the material is completed comprises determining whether or not kneading of the material is completed.

14. The method as claimed in claim 12 or 13, wherein the rotating of the agitator (510) while raising it toward the upper part of the material comprises:
determining whether or not a reference time is reached while the agitator (510) rises and rotates; and
when it is determined that the reference time is reached, simultaneously lowering and rotating the agitator (510).

15. The method as claimed in claim 14, further comprising:
stopping the rise of the agitator (510) while the agitator (510) rises and rotates; and
stopping the fall of the agitator (510) while the agitator (510) falls and rotates.
